# DEMANDE DE BREVET EUROPEEN

(11) **EP 4 672 103 A1**
(43) Date de publication de la demande: **31.12.2025**
(21) Numéro de dépôt: 25184905.5
(22) Date de dépôt: 24.06.2025
(51) Int. Cl.: G06Q 10/04, G06Q 50/06, H02J 3/00, H02J 3/14, H02J 3/38

(54) **OPTIMISATION DE L'UTILISATION DE L ÉNERGIE RENOUVELABLE**

(30) Priorité: 25.06.2024 FR 2406834
(71) Demandeur: SAGEMCOM ENERGY & TELECOM SAS, 92270 Bois-Colombes (FR)
(72) Inventeur: ALNEJAILI, Tareq, 92270 Bois-Colombes (FR); SABATIER, Pierre, 92270 Bois-Colombes (FR)
(74) Mandataire: Cabinet Boettcher

(57) **Abrégé**

Procédé d'optimisation de la consommation d'une installation (1), comprenant les premières étapes, réalisées avant une période déterminée, de :
- mettre en œuvre un procédé de désagrégation de manière à prédire pour chaque appareil (2), un profil individuel attendu de consommation ;
- prédire un profil attendu de production renouvelable par la source d'énergie renouvelable ;
- définir des premiers profils individuels optimisés de consommation pour les appareils, permettant de maximiser une utilisation de l'énergie électrique renouvelable ;
et la deuxième étape de piloter au cours de la période déterminée les appareils en utilisant les premiers profils individuels optimisés de consommation.

## Description

L'invention concerne le domaine de la gestion de la consommation électrique d'une installation connectée à une source d'énergie renouvelable (des panneaux photovoltaïques par exemple).

### ARRIERE PLAN

Aujourd'hui, de plus en plus d'installations domestiques sont connectées à des panneaux photovoltaïques, ce qui permet aux utilisateurs de réduire leur facture d'électricité ainsi que leur dépendance au réseau électrique traditionnel.

Cependant, les périodes de consommation électrique des divers appareils d'une installation ne coïncident pas avec la courbe de la production solaire, ce qui entraîne une sous-utilisation de l'énergie solaire disponible. La production solaire n'est donc pas optimisée sur les plans économique, technique et environnemental.

### OBJET

L'invention a pour objet d'optimiser la consommation de l'énergie renouvelable par les appareils d'une installation reliée à une source d'énergie renouvelable.

### RESUME

En vue de la réalisation de ce but, on propose un procédé d'optimisation d'une consommation électrique globale d'une installation comportant des appareils et reliée à une source d'énergie renouvelable, le procédé d'optimisation comprenant les premières étapes, réalisées avant une période déterminée, de :
- acquérir des mesures de la consommation électrique globale de l'installation ;
- mettre en œuvre un procédé de désagrégation de manière à prédire à partir desdites mesures, pour chaque appareil, un profil individuel attendu de consommation dudit appareil en fonction du temps pendant la période déterminée ;

- prédire un profil attendu de production renouvelable par la source d'énergie renouvelable en fonction du temps pendant la période déterminée ;
- adapter le profil individuel attendu de consommation d'au moins un appareil en fonction du profil attendu de production renouvelable, pour définir des premiers profils individuels optimisés de consommation pour les appareils, permettant de maximiser une utilisation d'une énergie électrique renouvelable, produite par la source d'énergie renouvelable, pour alimenter les appareils au cours de la période déterminée ;
le procédé d'optimisation comprenant de plus la deuxième étape, mise en œuvre au cours de la période déterminée, de piloter les appareils en utilisant les premiers profils individuels optimisés de consommation.

La mise en œuvre du procédé de désagrégation permet donc de prédire, pour la période déterminée (le lendemain par exemple), les profils individuels attendus de consommation électrique des différents appareils de l'installation. Les profils individuels sont alors adaptés (par un décalage temporel par exemple) en tenant compte de la prévision pour la période déterminée de la production d'énergie renouvelable, et les appareils sont pilotés en utilisant les profils individuels optimisés, ce qui permet de maximiser l'utilisation de l'énergie renouvelable.

Le procédé d'optimisation permet donc de :
- maximiser l'autoconsommation : on optimise l'utilisation de l'énergie renouvelable disponible pour maximiser l'autoconsommation et minimiser la dépendance aux sources d'énergie traditionnelles ;
- réaliser des économies d'énergie significatives : grâce à une planification et une optimisation intelligente de la consommation énergétique, l'utilisateur réalise des économies d'énergie significatives sur sa facture électrique ;
- favoriser une utilisation plus efficace et durable de l'énergie, ce qui contribue à la réduction des émissions de gaz à effet de serre et soutient la transition vers des modes de vie plus écologiques ;
- fournir une flexibilité et une adaptabilité importantes : le procédé d'optimisation peut être mis en œuvre dans différents environnements domestiques et configurations énergétiques, offrant ainsi une solution flexible pour les utilisateurs.

On propose de plus un procédé d'optimisation tel que précédemment décrit, dans lequel le profil individuel attendu de consommation **d'au** moins un appareil est aussi adapté, pour obtenir le premier profil individuel optimisé de consommation dudit appareil, en fonction d'une consigne utilisateur et/ou d'un tarif énergétique.

On propose de plus un procédé d'optimisation tel que précédemment décrit, dans lequel la prédiction du profil attendu de production renouvelable utilise des prévisions météorologiques pour la période déterminée.

On propose de plus un procédé d'optimisation tel que précédemment décrit, dans lequel, pour au moins un appareil, la prédiction du profil individuel attendu de consommation dudit appareil utilise des prévisions météorologiques pour la période déterminée.

On propose de plus un procédé d'optimisation tel que précédemment décrit, comprenant les étapes, suite à la mise en œuvre du procédé de désagrégation, de :
- classer chaque appareil dans au moins une catégorie parmi un groupe de catégories comprenant au moins trois catégories parmi : appareil interruptible, appareil non interruptible, appareil formant une charge principalement résistive, appareil formant une charge principalement inductive, appareil ayant une consommation déplaçable par bloc ;
- définir les premiers profils individuels optimisés de consommation en fonction de ce classement.

On propose de plus un procédé d'optimisation tel que précédemment décrit, dans lequel, pour un appareil interruptible, l'adaptation du profil individuel attendu de consommation comprend les étapes de :
- désactiver l'appareil interruptible pendant au moins une première période de faible disponibilité de l'énergie électrique renouvelable ;
- réactiver l'appareil interruptible pendant au moins une première période de forte disponibilité de l'énergie électrique renouvelable ;
- la première période de faible disponibilité et la première période de forte disponibilité appartenant à la période déterminée.

On propose de plus un procédé d'optimisation tel que précédemment décrit, dans lequel, pour un appareil formant une charge principalement résistive, l'adaptation du profil individuel attendu de consommation comprend les étapes de :
- réduire une puissance consommée par ledit appareil au cours d'au moins une deuxième période de faible disponibilité de l'énergie électrique renouvelable ;
- étaler la puissance consommée sur une durée allongée ou bien augmenter la puissance consommée par ledit appareil résistif au cours d'au moins une deuxième période de forte disponibilité de l'énergie électrique renouvelable ;
la deuxième période de faible disponibilité et la deuxième période de forte disponibilité appartenant à la période déterminée.

On propose de plus un procédé d'optimisation tel que précédemment décrit, dans lequel, pour un appareil ayant une consommation déplaçable par bloc, l'adaptation du profil individuel attendu de consommation comprend l'étape de déplacer temporellement une consommation dudit appareil sans changer une forme dudit profil depuis une troisième période de faible disponibilité de l'énergie électrique renouvelable vers une troisième période de forte disponibilité de l'énergie électrique renouvelable ;
la troisième période de faible disponibilité et la troisième période de forte disponibilité appartenant à la période déterminée.

On propose de plus un procédé d'optimisation tel que précédemment décrit, comprenant en outre les deuxièmes étapes, au cours de la période déterminée, de :
- surveiller en temps réel une production courante de la source d'énergie renouvelable et/ou une évolution de conditions météorologiques et/ou une consommation électrique courante d'au moins un appareil ;
- adapter les premiers profils individuels optimisés de consommation en fonction de résultats de cette surveillance, pour produire des deuxièmes profils individuels optimisés de consommation pour les appareils ;
- piloter les appareils en utilisant les deuxièmes profils individuels optimisés de consommation.

On propose de plus un procédé d'optimisation tel que précédemment décrit, comprenant l'étape de mettre en œuvre un algorithme de logique floue pour définir le premier profil individuel optimisé de consommation d'au moins un appareil.

On propose de plus un procédé d'optimisation tel que précédemment décrit, dans lequel l'algorithme de logique floue a pour entrées plusieurs grandeurs parmi :
- une irradiance prévue pour la période déterminée ;
- une température prévue pour la période déterminée ;
- au moins une consigne utilisateur ;
- au moins un tarif énergétique.

On propose de plus un procédé d'optimisation tel que précédemment décrit, dans lequel l'algorithme de logique floue a pour sortie un temps optimal de démarrage pour ledit appareil.

On propose de plus un procédé d'optimisation tel que précédemment décrit, comprenant l'étape d'exécuter une inférence d'un modèle d'apprentissage automatique préalablement entraîné pour définir le premier profil individuel optimisé de consommation d'au moins un appareil.

On propose de plus un procédé d'optimisation tel que précédemment décrit, dans lequel le modèle d'apprentissage automatique a pour entrées plusieurs grandeurs parmi :
- une irradiance prévue pour la période déterminée ;
- une température prévue pour la période déterminée ;
- au moins une consigne utilisateur ;
- au moins un tarif énergétique.

On propose de plus un procédé d'optimisation tel que précédemment décrit, dans lequel le modèle d'apprentissage automatique a pour sortie un temps optimal de démarrage pour ledit appareil.

On propose de plus un équipement de gestion, agencé pour piloter les appareils de l'installation, et comprenant une unité de traitement dans laquelle sont mises en œuvre au moins certaines des étapes du procédé d'optimisation tel que précédemment décrit.

On propose de plus un programme d'ordinateur comprenant des instructions qui conduisent l'unité de traitement de l'équipement de gestion tel que précédemment décrit à exécuter les étapes du procédé d'optimisation tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

### BREVE DESCRIPTION DES DESSINS

Il sera fait référence aux dessins annexés parmi lesquels :
[Fig. 1] la figure 1 représente une installation reliée à un panneau photovoltaïque ;
[Fig. 2] la figure 2 représente des étapes du procédé d'optimisation ;
[Fig. 3] la figure 3 représente des graphiques comprenant des courbes de signatures de consommation électrique de différents appareils ;
[Fig. 4] la figure 4 représente un graphique comprenant des courbes du profil individuel attendu de consommation du chauffe-eau, et du profil attendu de production renouvelable par les panneaux photovoltaïques ;
[Fig. 5] la figure 5 représente un graphique comprenant des courbes du premier profil individuel optimisé de consommation du chauffe-eau, et du profil attendu de production renouvelable par les panneaux photovoltaïques ;
[Fig. 6] la figure 6 représente un graphique (à gauche) comprenant des courbes du profil attendu de production renouvelable par les panneaux photovoltaïques et des profils individuels attendus de consommation de plusieurs appareils, et un graphique (à droite) comprenant des courbes du profil attendu de production renouvelable par les panneaux photovoltaïques et des premiers profils individuels optimisés de consommation de ces appareils ;
[Fig. 7] la figure 7 illustre la mise en œuvre de l'algorithme de logique floue.

### DESCRIPTION DETAILLEE

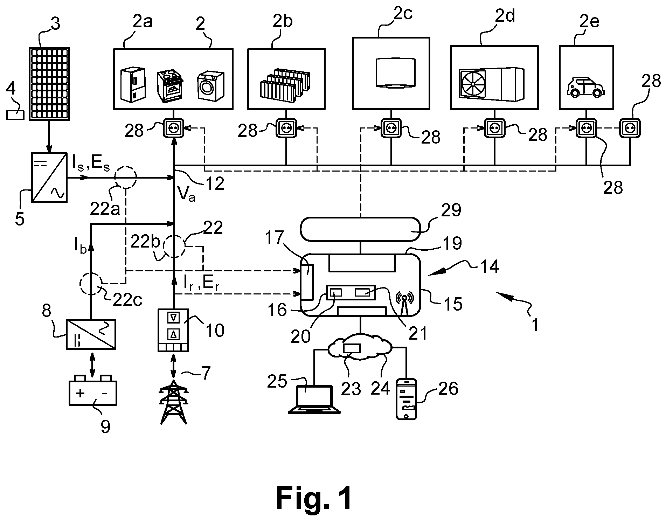

En référence à la figure 1, une installation domestique 1, qui est ici intégrée dans la maison d'un utilisateur, comprend un certain nombre d'appareils 2 dont le fonctionnement nécessite une alimentation électrique. Ces appareils 2 comprennent ici des appareils électroménagers 2a (réfrigérateur, four, machine à laver, etc.), des appareils de chauffage électrique 2b (radiateurs par exemple), un chauffe-eau 2c, un système de climatisation 2d, et une borne de recharge 2e permettant de recharger les batteries d'une voiture électrique.

L'installation 1 est connectée à une source d'énergie renouvelable, ici à des panneaux photovoltaïques 3 qui sont par exemple installés sur le toit de la maison (un seul panneau est représenté ici, mais il y peut y en avoir un ou plusieurs). Les panneaux photovoltaïques 3 sont associés à des capteurs d'irradiance 4 qui mesurent l'irradiance en temps réel. Les panneaux photovoltaïques 3 sont connectés à un onduleur 5 qui génère, à partir du courant (continu) produit par les panneaux photovoltaïques 3 sous une tension solaire (continue), un courant solaire Is (alternatif) sous une tension d'alimentation Va (alternative), permettant d'alimenter les appareils 2.

L'installation 1 est aussi reliée au réseau de distribution électrique 7 « traditionnel », qui lui fournit un courant réseau Ir (alternatif) sous la tension d'alimentation Va.

L'installation 1 est aussi connectée à un onduleur 8 « hybride » lui-même connecté à des batteries 9. L'onduleur hybride 8 produit un courant (continu) sous une tension de batterie (continue), qui peut être stocké dans les batteries 9 lorsque la production électrique des panneaux photovoltaïques 3 est supérieure au besoin de l'installation 1. Inversement, l'onduleur hybride 8 peut réinjecter un courant de batterie Ib (alternatif) pour alimenter l'installation 1 lorsque cela est nécessaire.

Un compteur électrique 10 est connecté à l'installation 1 et permet de mesurer l'énergie électrique réseau Er fournie par le réseau 7 à l'installation 1. Le compteur 10 est bidirectionnel : il peut aussi mesurer l'énergie électrique solaire Es produite par les panneaux photovoltaïques 3 et possiblement réinjectée sur le réseau 7.

L'onduleur 5, l'onduleur hybride 8 et les appareils 2 sont tous connectés au réseau interne 12 de l'installation 1, auquel est raccordé le compteur 10.

Les appareils 2 sont donc alimentés par deux sources distinctes : le réseau 7 qui fournit l'énergie électrique réseau Er, et les panneaux photovoltaïques 3 qui fournissent l'énergie électrique solaire Es (et les batteries 9 qui stockent une partie de l'énergie électrique solaire).

L'installation 1 comprend de plus un équipement de gestion 14 dont le rôle est d'optimiser la consommation électrique de l'installation 1 pour maximiser la consommation de l'énergie électrique solaire Es, ce qui permet de réduire la consommation par l'installation 1 de l'énergie électrique réseau Er.

L'équipement de gestion 14 est installé dans la maison de l'utilisateur, par exemple à proximité du compteur 10. L'équipement de gestion 14 comprend un boîtier 15 dans lequel sont intégrés une unité de traitement 16, des entrées analogiques 17, des premiers moyens de communication 18 et des deuxièmes moyens de communication 19.

L'unité de traitement 16 est une unité électronique et logicielle. L'unité de traitement 16 comprend au moins un composant de traitement 20, qui est par exemple un processeur « généraliste », un processeur spécialisé dans le traitement du signal (ou DSP, pour *Digital Signal Processor*), un processeur spécialisé pour les algorithmes d'intelligence artificielle (de type NPU, pour *Neural Processing Unit*), un microcontrôleur, ou bien un circuit logique programmable tel qu'un FPGA (pour *Field Programmable Gate Arrays*) ou un ASIC (pour *Application Specific Integrated Circuit*)*.*

L'unité de traitement 16 comprend aussi une ou des mémoires 21, reliées à ou intégrées dans le ou les composants de traitement 20. Au moins l'une de ces mémoires 21 forme un support d'enregistrement lisible par ordinateur, sur lequel est enregistré au moins un programme d'ordinateur comprenant des instructions qui conduisent l'unité de traitement 16 à exécuter au moins certaines des étapes du procédé d'optimisation qui va être décrit.

Les entrées analogiques 17 de l'équipement de gestion 14 sont connectées à des capteurs 22, parmi lesquels on trouve : un capteur de courant 22a qui mesure le courant solaire Is, un capteur de courant 22b qui mesure le courant réseau Ir, un capteur de courant 22c qui mesure le courant batterie Ib, et un capteur de tension (non représenté) qui mesure la tension alternative Va.

Les entrées analogiques 17 de l'équipement de gestion 14 sont aussi connectées aux capteurs d'irradiance 4 des panneaux photovoltaïques 3.

Tous les capteurs 4, 22 sont des capteurs « préexistants », classiquement présents dans une installation telle que l'installation 1, auxquels on vient donc connecter l'équipement de gestion 14 pour mettre en œuvre l'invention.

Les premiers moyens de communication 18 permettent à l'équipement de gestion 14 de communiquer avec un ou des serveurs distants 23 du *cloud* 24 (éventuellement via une passerelle intégrée dans l'installation 1). Les premiers moyens de communication 18 permettent aussi à l'utilisateur de communiquer avec l'équipement de gestion 14, par exemple via une application chargée sur son *smartphone* 25, ou via son ordinateur 26 (et via le *cloud* 24 éventuellement).

L'équipement de gestion 14 peut notamment acquérir des prévisions météorologiques pour anticiper les conditions de production solaire et les futurs besoins de consommation électrique des appareils 2. Les prévisions météorologiques peuvent comprendre par exemple des prévisions de température extérieure et des prévisions d'irradiance.

Les deuxièmes moyens de communication 19 permettent à l'équipement de gestion 14 de mettre en œuvre une communication pour piloter les appareils 2 de l'installation 1. Ici, par « piloter », on entend produire une commande quelconque qui influe sur la consommation électrique de l'appareil. Cette commande est par exemple une activation de l'appareil 2, une désactivation, un réglage d'un niveau de sortie quelconque de l'appareil (de température par exemple), etc.

Les deuxièmes moyens de communication 19 peuvent aussi permettre à l'équipement de gestion 14 de communiquer avec le compteur 10.

Les premiers moyens de communication 18 et les deuxièmes moyens de communication 19 comprennent des moyens filaires et/ou sans fil et/ou par courants porteurs en ligne, qui mettent en œuvre un ou des protocoles de communication connus, et par exemple NB-IoT, LTE-M, 2G, 3G, 4G, 5G, CPL, Wi-Fi, etc.

Ici, chaque appareil 2 de l'installation 1 est connecté à un module déporté 28. Tous les modules déportés 28 sont connectés ici à un module centralisé 29.

Les modules déportés 28 sont ici des prises électriques connectées. Le module centralisé 29 est ici un module domotique « intelligent » qui commande les appareils 2 via les modules déportés 28.

Le pilotage des appareils 2 est réalisé par l'équipement de gestion 14 via le module centralisé 29 et les modules déportés 28. L'équipement de gestion 14 utilise ses deuxièmes moyens de communication 19 pour transmettre les commandes au module centralisé 29 qui les retransmet (après traitements/mise en forme si nécessaire) aux modules déportés 28.

On note que plusieurs appareils 2 peuvent être connectés à un même module déporté 28 et pilotés via ledit module déporté 28. Un ou des groupes d'appareils 2 peuvent être formés. L'équipement de gestion 14 envoie alors possiblement une même consigne à tout le groupe d'appareils 2.

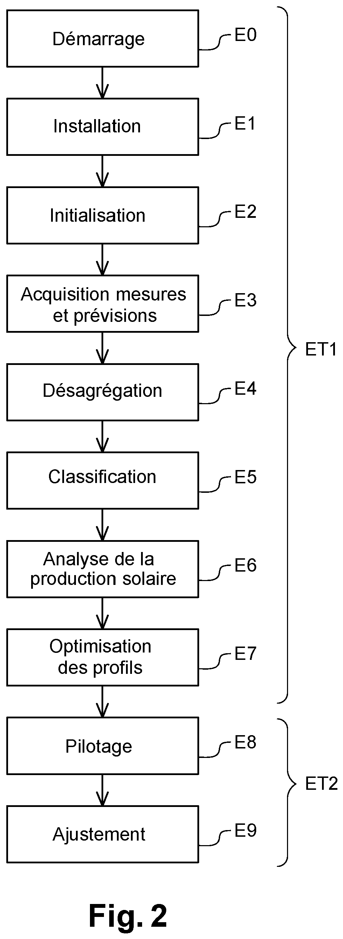

On s'intéresse maintenant, en référence à la figure 2, à la mise en œuvre du procédé d'optimisation par l'équipement de gestion 14.

Le procédé d'optimisation comprend des premières étapes ET1 et des deuxièmes étapes ET2.

Les premières étapes ET1 sont mises en œuvre avant une période déterminée. Ici, pour chaque jour en cours J (c'est-à-dire pour chaque jour « présent »), la période déterminée est le jour suivant J+1, donc le lendemain du jour en cours.

Les deuxièmes étapes ET2 sont mises en œuvre au cours de la période déterminée, donc le jour suivant, c'est-à-dire le lendemain du jour en cours.

On s'intéresse tout d'abord aux premières étapes ET1.

Le procédé d'optimisation démarre à l'étape E0.

L'équipement de gestion 14 est installé par l'utilisateur ou bien par un technicien dans l'installation 1, et est connecté aux appareils 2, aux capteurs 4, 22, au compteur 10 éventuellement, et au(x) serveur(s) 23 du *cloud* 24 : étape E1. Ces couplages peuvent être complétement automatiques, sans aucune intervention de l'utilisateur.

L'équipement de gestion 14 est donc simplement rajouté dans l'installation 1. Il est connecté aux équipements préexistants et ne nécessite aucun équipement additionnel particulier. La mise en œuvre du procédé d'optimisation est donc extrêmement simple et flexible, puisqu'elle requiert uniquement d'installer l'équipement de gestion 14.

L'unité de traitement 16 met en œuvre une étape d'initialisation E2. L'unité de traitement 16 configure les connexions aux appareils 2, aux différents capteurs 4, 22, aux serveurs 23 et au compteur 10 (si nécessaire).

Les étapes E0 à E2 sont réalisées une seule fois. Cependant, si la configuration de l'installation 1 change (nouveaux appareils, nouveaux capteurs, etc.), l'étape d'initialisation E2 peut être répétée.

Chaque jour, l'unité de traitement 16 charge les prévisions météorologiques, et notamment les prévisions de température et d'irradiance pour le lendemain. L'unité de traitement 16 peut ainsi anticiper la production électrique solaire et les besoins de consommation du lendemain (J+1).

L'unité de traitement 16 récupère les mesures de la consommation électrique globale de l'installation 1 et les mesures de la production électrique solaire par les panneaux photovoltaïques 3 : étape E3.

Ces mesures sont disponibles via les capteurs 4, 22 et éventuellement en interrogeant le compteur 10.

Par « consommation électrique globale », on entend la consommation de la totalité l'ensemble de l'installation 1, sans distinguer les appareils 2.

L'étape E3 est réalisée en permanence, chaque jour.

L'unité de traitement 16 acquiert donc, en permanence, les prévisions météorologiques et les mesures de la consommation électrique globale de l'installation 1.

L'unité de traitement 16 met alors en œuvre un procédé de désagrégation, de manière à prédire à partir desdites mesures, pour chaque appareil 2, un profil individuel attendu de consommation électrique dudit appareil 2 en fonction du temps pendant la période déterminée (donc pour le jour suivant) : étape E4. Chaque profil individuel attendu est par exemple formé à partir de valeurs de puissance consommée en fonction du temps, pendant la période déterminée.

La désagrégation permet de détecter les différents consommateurs dans la maison. La désagrégation de la consommation électrique totale de la maison, en temps réel, permet d'identifier et de suivre la consommation de chaque appareil électrique 2 ou groupe d'appareils.

Le procédé de désagrégation est répété régulièrement pour détecter de nouveaux appareils.

La désagrégation, non intrusive, identifie la consommation de chaque appareil 2 en détectant dans les mesures de la consommation électrique globale une signature électrique associée audit appareil 2 (c'est-à-dire une forme particulière d'une courbe de consommation en fonction du temps). L'unité de traitement 16 analyse pour cela par exemple les courbes d'intensité et de tension, avec une fréquence par exemple de l'ordre de 10 kHz, et qui est comprise ici entre 5 kHz et 20 kHz.

Le procédé de désagrégation est répété régulièrement pour détecter de nouveaux appareils.

Le procédé de désagrégation est connu de l'homme du métier.

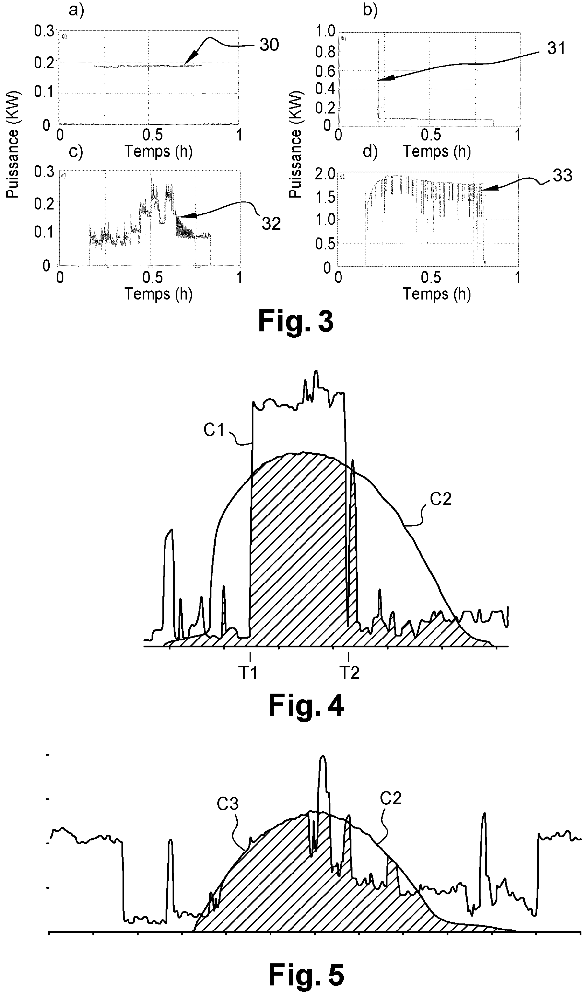

On voit sur la figure 3 des signatures pour quatre types d'appareils :
- signature 30 d'un appareil à un état sans pic significatif ; il s'agit d'une lampe par exemple ;
- signature 31 d'un appareil à un état avec pic significatif ; il s'agit d'un réfrigérateur par exemple ;
- signature 32 d'un appareil non linéaire ; il s'agit d'un ordinateur portable par exemple ;
- signature 33 d'un appareil continu avec décroissance ; il s'agit d'une climatisation par exemple.

Ces données proviennent du document *[*Pascal Schirmer, Iosif Mporas, Akbar Sheikh Akbari. 'Robust energy disaggregation using appliance-specific temporal contextual information" EURASIP Journal on Advances in Signal Processing. 2020*].*

L'unité de traitement 16 obtient donc, au bout d'un temps d'observation de la consommation de la maison, par exemple de quelques semaines, une liste d'appareils qui consomment dans la maison.

La désagrégation peut aussi identifier le profil de consommation pour un groupe d'appareils à l'aide d'une signature permettant d'identifier ledit groupe.

L'unité de traitement 16 enregistre les données de chaque appareil 2 ou groupe d'appareils.

Suite à l'étape de désagrégation, l'unité de traitement 16 classe chaque appareil 2 ou groupe d'appareils dans au moins une des catégories d'un groupe de catégories : étape E5. Le groupe de catégories comprend au moins trois des catégories suivantes :
- appareil interruptible ;
- appareil non interruptible ;
- appareil formant une charge principalement résistive ;
- appareil formant une charge principalement inductive ;
- appareil ayant une consommation déplaçable par bloc.

Les appareils interruptibles peuvent être allumés ou éteints « à volonté ». Ils sont par exemple interruptibles à la seconde près. Au contraires, les appareils non interruptibles, une fois qu'ils ont démarré, ne peuvent plus être désactivés.

Les appareils formant une charge principalement résistive comprennent par exemple un chauffe-eau purement résistif, un radiateur, etc.

Les appareils formant une charge principalement inductive comprennent par exemple des appareils intégrant un moteur.

Les appareils ayant une consommation déplaçable par bloc ont une consommation électrique dont le profil peut être déplacé temporellement en gardant sa forme initiale.

Les appareils non interruptibles et ayant une consommation non déplaçable comprennent par exemple le réfrigérateur, le congélateur, le système d'éclairage, etc.

Les appareils non interruptibles et ayant une consommation déplaçable par bloc comprennent par exemple un chauffe-eau thermodynamique intégrant une pompe à chaleur. Un tel ballon d'eau chaude n'est pas interruptible simplement à moins d'endommager la pompe à chaleur.

Puis, l'unité de traitement 16 analyse les mesures de la production électrique solaire et prédit un profil attendu de production renouvelable par le au moins un panneau photovoltaïque 3 en fonction du temps pendant le jour suivant : étape E6.

L'unité de traitement 16, pour cela, surveille et analyse la production renouvelable (solaire) en temps réel, et enregistre les données de production solaire pour calculer l'énergie disponible.

A nouveau, le profil attendu de production renouvelable est par exemple formé à partir de valeurs de puissance produite en fonction du temps, pendant la période déterminée.

L'unité de traitement 16 va alors adapter le profil individuel attendu de consommation électrique d'au moins un appareil 2 à partir du profil attendu de production renouvelable, pour définir des premiers profils individuels optimisés de consommation pour les appareils 2, permettant de maximiser une utilisation de l'énergie électrique solaire pour alimenter les appareils 2 au cours de la période déterminée : étape E7.

Le profil individuel attendu de consommation d'au moins un appareil 2 est aussi adapté, pour obtenir le premier profil individuel optimisé de consommation dudit appareil, en fonction d'une consigne utilisateur et/ou d'un tarif énergétique.

Si, pour un appareil 2, le profil individuel attendu n'est pas adapté car déjà optimisé, on considère que le premier profil individuel optimisé est le profil individuel attendu pour ledit appareil 2.

L'unité de traitement 16 simule un démarrage des appareils 2. L'unité de traitement 16 compare donc virtuellement les données de consommation des appareils 2 avec les prévisions de production solaire, et simule le fonctionnement des différents appareils en fonction des prévisions de consommation et de production solaire. L'unité de traitement 16 détermine ainsi les moments opportuns pour démarrer ou éteindre certains appareils, mais aussi, lorsque cela est possible, adapte les puissances consommées, afin d'optimiser l'utilisation de l'énergie solaire. La simulation va déterminer les moments opportuns pour utiliser l'énergie solaire produite afin de maximiser l'autoconsommation. L'unité de traitement 16 adapte la charge des appareils électriques 2 en conséquence (ex : décaler les périodes de fonctionnement, réduire la puissance de certains appareils, augmenter la puissance pendant une certaine période et la réduire pendant une autre période, séquencer la consommation en différentes périodes disjointes, etc.).

L'unité de traitement 16 définit les premiers profils individuels optimisés de consommation en fonction du résultat du classement des appareils.

L'adaptation des profils individuels de consommation des appareils 2 va donc dépendre de la catégorie dans laquelle a été classé l'appareil 2 (ou des catégories).

Par exemple, pour un appareil interruptible, l'adaptation du profil individuel attendu de consommation comprend les étapes de :
- désactiver l'appareil interruptible pendant au moins une première période de faible disponibilité de l'énergie électrique renouvelable (ici solaire) ;
- réactiver l'appareil interruptible pendant au moins une première période de forte disponibilité de l'énergie électrique renouvelable (ici solaire) ;
la première période de faible disponibilité et la première période de forte disponibilité appartenant à la période déterminée (ici le jour suivant).

Les périodes de faible disponibilité d'énergie solaire peuvent correspondre à des périodes au cours desquelles les panneaux 3 produisent peu, mais aussi à des périodes au cours desquelles la consommation globale de l'installation est élevée.

Pour un appareil formant une charge principalement résistive, l'adaptation du profil individuel attendu de consommation comprend les étapes de :
- réduire une puissance consommée par ledit appareil au cours d'au moins une deuxième période de faible disponibilité de l'énergie électrique renouvelable ;
- d'étaler la puissance consommée sur une durée allongée ou bien d'augmenter la puissance consommée par ledit appareil résistif au cours d'au moins une deuxième période de forte disponibilité de l'énergie électrique renouvelable ;
la deuxième période de faible disponibilité et la deuxième période de forte disponibilité appartenant à la période déterminée.

Pour un appareil ayant une consommation déplaçable par bloc, l'adaptation du profil individuel attendu de consommation comprend l'étape de déplacer temporellement une consommation dudit appareil sans changer la forme du profil depuis une troisième période de faible disponibilité de l'énergie électrique renouvelable vers une troisième période de forte disponibilité élevée de l'énergie électrique renouvelable ;
la troisième période de faible disponibilité et la troisième période de forte disponibilité appartenant à la période déterminée (ici le jour suivant).

Les étapes E6 et E7 sont ici réalisées chaque jour en cours, pour prédire et optimiser les profils pour le jour suivant. Ces étapes sont donc répétées quotidiennement.

On s'intéresse maintenant aux deuxièmes étapes ET2, mises en œuvre pendant la période déterminée, c'est-à-dire pendant le jour suivant J+1.

L'unité de traitement 16 pilote les appareils 2 en utilisant les premiers profils individuels optimisés de consommation : étape E8.

L'unité de traitement 16 utilise ici le module centralisé 29 et les modules déportés 28 pour ajuster le fonctionnement des appareils 2 en fonction des résultats de l'optimisation. L'unité de traitement 16 alloue la charge entre les appareils de manière à maximiser l'efficacité énergétique.

De plus, pendant la période déterminée, l'unité de traitement 16 :
- surveille en temps réel une production courante des panneaux photovoltaïques 3 et/ou une évolution des conditions météorologiques (température, irradiance, etc.) et/ou une consommation électrique courante d'au moins un appareil 2 ;
- adapte les premiers profils individuels optimisés de consommation en fonction de résultats de cette surveillance, pour produire des deuxièmes profils individuels optimisés de consommation pour les appareils ;
- pilote les appareils en utilisant les deuxièmes profils individuels optimisés de consommation.

L'unité de traitement 16 ajuste donc les paramètres de l'algorithme d'optimisation des profils en fonction des résultats obtenus pour améliorer l'efficacité et les économies d'énergie : étape E9.

En particulier, l'unité de traitement 16 surveille en temps réel une production courante des panneaux photovoltaïques 3. L'unité de traitement 16 adapte les premiers profils individuels optimisés de consommation en fonction de la production courante pour produire des deuxièmes profils optimisés de consommation pour les appareils 2.

L'unité de traitement 16 peut aussi détecter la consommation électrique de nouveaux appareils. En continuant à surveiller la consommation énergétique de la maison, l'unité de traitement 16 détecte l'ajout éventuel de nouveaux appareils électriques. L'unité de traitement 16 peut proposer alors une nouvelle période de test pour évaluer l'impact de ces appareils sur la consommation globale d'énergie.

A nouveau, si pour un appareil 2, le premier profil individuel optimisé associé n'est pas adapté car déjà optimisé, on considère que le deuxième profil optimisé est le premier profil optimisé pour ledit appareil.

On décrit maintenant le résultat de la mise en œuvre du procédé d'optimisation sur un chauffe-eau purement résistif.

On voit sur la figure 4 le profil individuel attendu de consommation (courbe C1) du chauffe-eau 2c en fonction du temps pendant le jour suivant, ainsi que le profil attendu de production renouvelable (courbe C2) par les panneaux photovoltaïques 3, tels qu'ils sont prédits par l'unité de traitement 16. Le chauffe-eau 2c est ici commandé avec une commande en « tout ou rien ». La puissance consommée est notamment élevée entre les temps T1 et T2 et dépasse dans cet intervalle de temps la puissance électrique solaire disponible. La puissance restante doit être fournie par le réseau 7, et donc à un tarif élevé.

Lors du jour en cours, l'unité de traitement 16 adapte le profil individuel attendu de consommation du chauffe-eau et définit un premier profil individuel optimisé de consommation. En référence à la figue 5, le jour suivant, l'unité de traitement 16 pilote le chauffe-eau 2c en utilisant le premier profil individuel optimisé de consommation (courbe C3). L'unité de traitement 16, pour cela, pilote le chauffe-eau 2c en utilisant une commande par variation de puissance. L'unité de traitement 16 va ainsi réduire la puissance consommée par le chauffe-eau au cours de la période de faible disponibilité de l'énergie électrique solaire, et étaler la puissance consommée sur une durée allongée.

Ainsi, même si le temps de fonctionnement du chauffe-eau est plus long, la presque totalité de la puissance fournie au chauffe-eau provient des panneaux photovoltaïques 3. Le complément éventuel, très réduit, est fourni par le réseau 7.

L'utilisation du premier profil individuel optimisé de consommation pour le chauffe-eau permet donc de maximiser l'utilisation de l'énergie électrique solaire.

En ce qui concerne les radiateurs électriques, leur consommation globale est analysée et un pilotage sera envisagé éventuellement via une commande de type « fil pilote ».

La recharge électrique de véhicule peut également être 100% solaire comme sur les courbes.

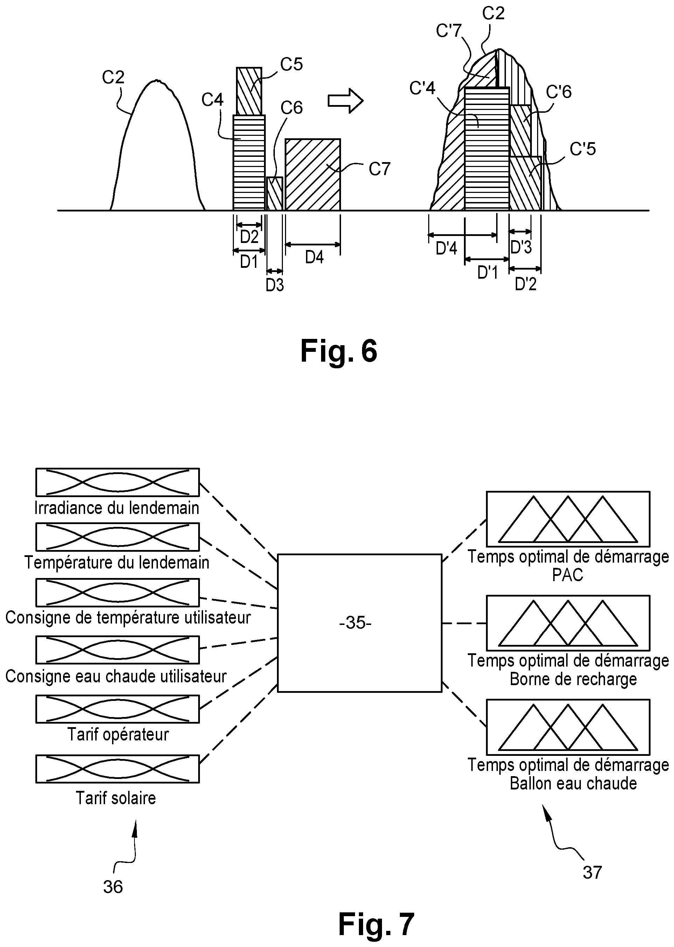

On voit sur le graphique de gauche de la figure 6 les profils individuels attendus de consommation, prédits, pendant le jour en cours, par l'unité de traitement 16 pour le jour suivant et pour quatre appareils : la pompe à chaleur du système de chauffage (courbe C4), qui consomme de l'énergie électrique principalement au cours de la période D1, le chauffe-eau (courbe C5), qui consomme de l'énergie électrique principalement au cours de la période D2, une machine quelconque (courbe C6), qui consomme de l'énergie électrique principalement au cours de la période D3, et la borne de recharge (courbe C7), qui consomme de l'énergie électrique principalement au cours de la période D4.

La courbe C2 correspond au profil attendu de production renouvelable pour la période déterminée (le lendemain).

On voit que selon les prédictions réalisées, et sans optimisation des profils de consommation, l'énergie électrique solaire sera mal exploitée car les appareils consomment principalement au cours de périodes D1, D2, D3, D4 de faible disponibilité de l'énergie électrique solaire.

Sur le graphique de droite, on voit les premiers profils individuels optimisés de consommation, qui ont été définis par l'unité de traitement 16 au cours du jour en cours et qui sont utilisés pour piloter les appareils 2 pendant le jour suivant : courbe C'4 pour la pompe à chaleur du système de chauffage, courbe C'5 pour le chauffe-eau, courbe C'6 pour la machine, courbe C'7 pour la borne de recharge.

On voit que :
- les consommations de la pompe à chaleur, du chauffe-eau et de la machine, qui sont ici des appareils ayant une consommation déplaçable par bloc, sont déplacées respectivement des périodes D1, D2, D3 (de forte disponibilité de l'énergie électrique solaire) vers les périodes D'1, D'2, D'3 (de forte disponibilité de l'énergie électrique solaire) ;
- la consommation de la borne de recharge est décalée de la période D4 (de forte disponibilité de l'énergie électrique solaire) vers la période D'4 (de forte disponibilité de l'énergie électrique solaire). La forme du profil est modifiée.

On a ainsi optimisé l'utilisation de l'énergie solaire pour alimenter ces appareils.

Dans un mode de réalisation, l'unité de traitement 16 met en œuvre un algorithme de logique floue pour définir le premier profil individuel optimisé de consommation d'au moins un appareil 2.

Cette approche, basée sur la logique de floue, peut prendre en compte diverses variables telles que, par exemple, des prévision météorologiques (par exemple l'irradiance prédite pour le lendemain, la température extérieure prédite pour le lendemain), les consignes du client pour la température et l'eau chaude, les tarifs opérateur et solaire, etc.

La sortie de l'algorithme est par exemple le temps optimal de démarrage d'un appareil, par exemple la borne de recharge, le chauffe-eau ou la pompe à chaleur.

Pour atteindre cet objectif, l'algorithme analyse en temps réel les données météorologiques, les données des capteurs d'irradiance 4, les préférences du client, puis prend des décisions intelligentes sur la mise en marche ou l'arrêt des appareils 2. Par exemple, si l'irradiance prédite pour le lendemain est élevée et que le tarif solaire est bas, l'algorithme peut décider de démarrer la borne de recharge dans l'après-midi pour maximiser l'utilisation de l'énergie solaire. De même, si la température extérieure est basse et que la consigne d'eau chaude du client est haute, le chauffe-eau peut être programmé pour démarrer le matin afin de fournir de l'eau chaude pour la douche.

Ainsi, en référence à la figure 7, l'algorithme de logique floue 35 a pour entrées 36 plusieurs grandeurs parmi :
- une irradiance prévue pour la période déterminée ;
- une température prévue pour la période déterminée ;
- au moins une consigne utilisateur ;
- au moins un tarif énergétique.

Les entrées 26 comprennent donc ici par exemple toutes ou certaines des grandeurs suivantes :
- Irradiance du lendemain ; température du lendemain : chacune de ces entrées peut être divisée en plusieurs catégories (membres de l'ensemble flou) telles que « faible », « moyenne » et « élevée », en fonction de la valeur d'irradiance prévue et de température ;
- Consigne de température utilisateur ; consigne d'eau chaude utilisateur : la référence de température et d'eau chaude souhaitées par l'utilisateur peuvent être classées en catégories telles que « basse », « normale », et « haute » ;
- Tarif opérateur ; tarif solaire : chacune de ces entrées représente les tarifs d'énergie, classés en « bas », « moyens », et « élevés » en fonction de leur valeur.

L'algorithme de logique floue 35 a par exemple pour sortie 37, pour chaque appareil 2, un temps optimal de démarrage pour ledit appareil 2. Cette sortie correspond au temps optimal pour démarrer l'appareil. Elle peut être classée en catégories telles que « matin », « midi », et « soir ».

L'unité de traitement 16 peut adapter les entrées 36 et les sorties 37 de cet algorithme 35 en fonction des appareils spécifiques détectés par la désagrégation de la charge. Par exemple, si des appareils supplémentaires sont détectés, leurs états peuvent être inclus en tant qu'entrées supplémentaires dans l'algorithme. De même, les sorties de l'algorithme peuvent être modifiées pour inclure le contrôle de ces appareils supplémentaires, en plus de la pompe à chaleur, du chauffe-eau et de la borne de recharge.

L'unité de traitement 16 peut intégrer de nouvelles entrées et sorties. D'autres paramètres peuvent également être inclus en tant qu'entrées dans l'algorithme. Par exemple, le niveau de charge de la batterie du véhicule électrique peut être surveillé et utilisé comme une entrée pour planifier la recharge de manière plus efficace. De même, d'autres équipements tels que les systèmes de stockage d'énergie domestique ou les dispositifs de gestion de l'énergie peuvent être intégrés au système pour une gestion plus holistique de la consommation d'énergie.

On décrit maintenant un premier exemple de mise en œuvre de l'algorithme de logique floue 35.

On décrit les fonctions d'appartenance et les règles floues pour un algorithme de logique floue 35 qui utilise les entrées données (irradiance du lendemain, température du lendemain, consigne de température client, consigne d'eau chaude client, tarif opérateur, tarif solaire) pour déterminer le temps optimal de démarrage de contrôle des appareils en fonction de la désagrégation.

Les fonctions d'appartenance sont dans cet exemple :
- Irradiance du lendemain :
   o Faible : Triangulaire de 0 à 300 W/m² ;
   o Moyenne : Triangulaire de 200 à 800 W/m² ;
   o Élevée : Triangulaire de 600 à 1200 W/m².
- Température du lendemain :
   o Basse : Triangulaire de 0 à 15 °C ;
   o Normale : Triangulaire de 10 à 25 °C ;
   o Haute : Triangulaire de 20 à 35 °C.
- Consigne de température client :
   o Basse : Triangulaire de 18 à 22 °C ;
   o Normale : Triangulaire de 20 à 24 °C ;
   o Haute : Triangulaire de 22 à 26 °C.
- Consigne d'eau chaude client :
   o Basse : Triangulaire de 40 à 50 °C ;
   o Normale : Triangulaire de 50 à 60 °C ;
   o Haute : Triangulaire de 60 à 70 °C.
- Tarif opérateur :
   o Bas : Triangulaire de 0 à 0,15 €/kWh ;
   o Moyen : Triangulaire de 0,10 à 0,30 €/kWh ;
   o Élevé : Triangulaire de 0,25 à 0,50 €/kWh.
- Tarif solaire :
   o Bas : Triangulaire de 0 à 0,05 €/kWh ;
   o Moyen : Triangulaire de 0,04 à 0,10 €/kWh ;
   o Élevé : Triangulaire de 0,08 à 0,15 €/kWh.
- Temps optimal de démarrage :
   o Matin : Triangulaire de 6h00 à 11h00 ;
   o Midi : Triangulaire de 11h00 à 14h00 ;
   o Après-midi : Triangulaire de 14h00 à 18h00 ;
   o Soir : Triangulaire de 18h00 à 20h00 ;
   o Nuit : Triangulaire de 20h00 à 6h00.
- Contrôle de la borne de recharge, ballon d'eau chaude et pompe à chaleur :
   o Éteint : Triangulaire de 0 à 0,5 ;
   o Allumé : Triangulaire de 0,5 à **1.**

Les règles floues sont par exemple les suivantes pour le contrôle de la pompe à chaleur :
- Si la consigne de température client est « haute » et l'irradiance du lendemain est « élevée » alors :
   o Si la température intérieure est basse alors la pompe à chaleur doit être « allumée » le matin pour chauffer la maison avant le lever du soleil ;
   o Sinon, si la température intérieure est normale alors la pompe à chaleur doit être « allumée » dans l'après-midi pour maintenir une température confortable.
- Si la consigne de température client est « normale » et l'irradiance du lendemain est « moyenne » alors :
   o Si la température intérieure est basse alors la pompe à chaleur doit être « allumée » dans l'après-midi pour maintenir une température confortable ;
   o Sinon, si la température intérieure est normale alors la pompe à chaleur doit rester « éteinte » pour économiser de l'énergie.

Les règles floues sont par exemple les suivantes pour le contrôle du ballon d'eau chaude :
- Si la consigne d'eau chaude client est « haute » et l'irradiance du lendemain est « élevée » alors :
   o Si la température extérieure est basse alors le ballon d'eau chaude doit être « allumé » le matin pour fournir de l'eau chaude pour la douche ;
   o Sinon, si la température extérieure est normale alors le ballon d'eau chaude doit être « allumé » en fin de matinée pour répondre à la demande prévue d'eau chaude ;
   o Sinon, si la température extérieure est élevée alors le ballon d'eau chaude doit être « allumé » dans l'après-midi pour répondre à la demande d'eau chaude pour la cuisine et le lavage.
- Si la consigne d'eau chaude client est « normale » et l'irradiance du lendemain est « moyenne » alors :
   o Si la température extérieure est basse alors le ballon d'eau chaude doit être « allumé » en fin de matinée pour fournir de l'eau chaude pour la douche ;
   o Sinon, si la température extérieure est normale alors le ballon d'eau chaude doit être « allumé » dans l'après-midi pour répondre à la demande prévue d'eau chaude.

On donne un exemple de résultat de l'algorithme pour le contrôle du ballon d'eau chaude :
Si [irradiance, consigne d'eau chaude, température extérieure] = [700W/m2, 44°C,15°C], alors le temps optimal pour démarrer le ballon d'eau chaude est 7h :00.

Les règles floues sont par exemple les suivantes pour le contrôle de la borne de recharge :
- Si la consigne de température client est faible et le tarif opérateur est faible et l'irradiance prévue pour le lendemain est « élevée » et le tarif solaire est « bas » Allumer la borne de recharge dans l'après-midi pour maximiser l'utilisation de l'énergie solaire. (priorité au rapport coût-efficacité) ;
- Si l'irradiance prévue pour le lendemain est « moyenne » et le tarif opérateur est « bas » alors : Allumer la borne de recharge le matin pour recharger la batterie à moindre coût ;
- Si l'irradiance prévue pour le lendemain est « moyenne » et le tarif solaire est « élevé » alors : Allumer la borne de recharge dans l'après-midi pour maximiser l'utilisation de l'énergie solaire.

On décrit maintenant un deuxième exemple.

Les entrées sont les suivantes :
- Irradiance (J+1) : Très faible, Faible, Moyenne, Élevée, Très élevée ;
- Température (J+1) : Très froide, Froide, Confortable, Chaude, Très chaude ;
- Consigne de température client : Très faible, Faible, Moyenne, Élevée, Très élevée ;
- Consigne d'eau chaude client : Très faible, Faible, Moyenne, Élevée, Très élevée ;
- Tarif opérateur : Très faible, Faible, Moyen, Élevé, Très élevé ;
- Tarif solaire : Très faible, Faible, Moyen, Élevé, Très élevé ;
- Heure de la journée : Nuit, Matin tôt, Matin, Midi, Après-midi, Soirée, Nuit.

Les sorties sont les suivantes :
- Heure de démarrage optimale : Nuit, Matin tôt, Matin, Midi, Après-midi, Soirée ;
- Commandes de contrôle (Marche/Arrêt) : Borne de recharge, Chauffe-eau, Pompe à chaleur.

Les fonctions d'appartenance sont dans cet exemple :
- Irradiance :
   o Très faible : 0 ≤ Irradiance ≤ 100 W/m² ;
   o Faible : 101 ≤ Irradiance ≤ 300 W/m² ;
   o Moyenne : 301 ≤ Irradiance ≤ 600 W/m² ;
   o Élevée : 601 ≤ Irradiance ≤ 900 W/m² ;
   o Très élevée : Irradiance > 900 W/m².
- Température :
   o Très froide : Température ≤ 12°C ;
   o Froide : 13 ≤ Température ≤ 16°C ;
   o Confortable : 17 ≤ Température ≤ 22°C ;
   o Chaude : 23 ≤ Température ≤ 26°C ;
   o Très chaude : Température > 26°C.
- Consigne de température client :
   o Très faible : 12 ≤ Consigne de température ≤ 15°C ;
   o Faible : 16 ≤ Consigne de température ≤ 19°C ;
   o Moyenne : 20 ≤ Consigne de température ≤ 23°C ;
   o Élevée : 24 ≤ Consigne de température ≤ 27°C ;
   o Très élevée : Consigne de température > 27°C.
- Consigne d'eau chaude client :
   o Très faible : 0 ≤ Consigne d'eau chaude ≤ 20% ;
   o Faible : 21 ≤ Consigne d'eau chaude ≤ 40% ;
   o Moyenne : 41 ≤ Consigne d'eau chaude ≤ 60% ;
   o Élevée : 61 ≤ Consigne d'eau chaude ≤ 80% ;
   o Très élevée : Consigne d'eau chaude > 80%.
- Tarif opérateur :
   o Très faible : 0 ≤ Tarif ≤ 0,05 €/kWh ;
   o Faible : 0,06 ≤ Tarif ≤ 0,10 €/kWh ;
   o Moyen : 0,11 ≤ Tarif ≤ 0,15 €/kWh ;
   o Élevé : 0,16 ≤ Tarif ≤ 0,20 €/kWh ;
   o Très élevé : Tarif > 0,20 €/kWh.
- Tarif solaire :
   o Très faible : 0 ≤ Tarif ≤ 0,05 €/kWh ;
   o Faible : 0,06 ≤ Tarif ≤ 0,10 €/kWh ;
   o Moyen : 0,11 ≤ Tarif ≤ 0,15 €/kWh ;
   o Élevée : 0,16 ≤ Tarif ≤ 0,20 €/kWh ;
   o Très élevé : Tarif > 0,20 €/kWh.
- Heure de la journée :
   o Nuit : 00:00 ≤ Heure ≤ 06:00 ;
   o Matin tôt : 06:01 ≤ Heure ≤ 07:30 ;
   o Matin : 07:31 ≤ Heure ≤ 09:00 ;
   o Midi : 09:01≤ Heure ≤ 14:00 ;
   o Après-midi : 14:01≤ Heure ≤ 18:00 ;
   o Soirée : 18:01≤ Heure ≤ 20:00 ;
   o Nuit : 20:01≤ Heure ≤ 00:00.

Les règles floues sont par exemple les suivantes pour le contrôle de la pompe à chaleur :
- Si l'irradiance est très faible et la température est très froide et que la consigne de température client est Élevée ou Très élevée, alors l'heure de démarrage optimal du chauffage est le matin tôt pour maintenir la chaleur ;
- Si l'irradiance est faible et la température est froide, et que la consigne de température client est Élevée ou Très élevée, alors l'heure de démarrage optimal du chauffage est le matin pour utiliser l'énergie solaire et garantir le confort ;
- Si l'irradiance est moyenne et la température est froide, et que la consigne de température client est Élevée ou Très élevée, alors le chauffage peut démarrer le matin ou à midi pour équilibrer l'énergie solaire avec le confort ;
- Si l'irradiance est élevée et la température est froide, et que la consigne de température client est Élevée ou Très élevée ou Moyenne, alors le chauffage doit démarrer à midi pour maximiser l'utilisation de l'énergie solaire ;
- Si l'irradiance est très élevée et la température est froide, et que la consigne de température client est Élevée ou Très élevée ou Moyenne, alors le chauffage peut démarrer à midi ou dans l'après-midi pour gérer la surproduction solaire ;
- Si l'irradiance est très faible et la température est confortable, et que la consigne de température client est Élevée ou Très élevée ou Moyenne, alors le chauffage doit démarrer le matin tôt pour maintenir la chaleur ;
- Si l'irradiance est faible et la température est confortable, et que la consigne de température client est Faible ou Très faible ou Moyenne alors le chauffage doit démarrer le matin pour utiliser l'énergie solaire ;
- Si l'irradiance est moyenne et la température est confortable, et que la consigne de température client est Élevée ou Très élevée ou Moyenne alors le chauffage peut démarrer le matin ou à midi pour équilibrer l'énergie solaire avec le confort ;
- Si l'irradiance est élevée et la température est confortable, et que la consigne de température client est Faible ou Très faible alors le chauffage n'est pas nécessaire pour économiser de l'énergie ;
- Si l'irradiance est très élevée et la température est confortable, et que la consigne de température client est Faible ou Très faible alors le chauffage n'est pas nécessaire et la climatisation peut être activée pour le confort.

On note que ces règles peuvent être encore affinées en fonction des spécificités du système et des besoins des utilisateurs.

Les règles floues sont par exemple les suivantes pour le contrôle du chauffe-eau :
- Si la consigne d'eau chaude est très faible et l'irradiance est très faible, alors l'heure de démarrage optimale est définie comme « Nuit » ;
- Si la consigne d'eau chaude est très faible et l'irradiance est faible, alors le chauffe-eau peut être activé pendant une courte durée pour utiliser l'énergie solaire. L'heure de démarrage optimale est définie comme « Matin tôt » ;
- Si la consigne d'eau chaude est très faible et l'irradiance est moyenne, alors le chauffe-eau peut être activé pendant une durée plus longue pour maximiser l'utilisation de l'énergie solaire. L'heure de démarrage optimale est définie comme « Matin » ;
- Si la consigne d'eau chaude est très faible et l'irradiance est élevée, alors le chauffe-eau peut être activé la plupart de la journée pour profiter de l'énergie solaire. L'heure de démarrage optimale est définie comme « Matin » ou « Midi » ;
- Si la consigne d'eau chaude est très faible et l'irradiance est très élevée, alors le chauffe-eau peut être activé toute la journée pour maximiser l'utilisation de l'énergie solaire. L'heure de démarrage optimale est définie comme « Matin » ou « Midi » ou « Après-midi » ;
- Si la consigne d'eau chaude est faible et l'irradiance est très faible, l'heure de démarrage optimale est définie comme « Nuit » ;
- Si la consigne d'eau chaude est faible et l'irradiance est faible, alors le chauffe-eau peut être activé pendant une courte durée pour utiliser l'énergie solaire. L'heure de démarrage optimale est définie comme « Matin tôt » ;
- Si la consigne d'eau chaude est faible et l'irradiance est moyenne, alors le chauffe-eau peut être activé pendant une durée modérée pour équilibrer l'énergie solaire avec le besoin en eau chaude. L'heure de démarrage optimale est définie comme « Matin » ou « Midi » ;
- Si la consigne d'eau chaude est faible et l'irradiance est élevée, alors le chauffe-eau peut être activé pendant une grande partie de la journée pour maximiser l'utilisation de l'énergie solaire. L'heure de démarrage optimale est définie comme « Matin » ou « Midi » ou « Après-midi » ;
- Si la consigne d'eau chaude est faible et l'irradiance est très élevée, alors le chauffe-eau peut être activé en tenant compte du tarif solaire pour éviter la surproduction. L'heure de démarrage optimale est définie comme « Matin » ou « Midi » ou « Après-midi ».

Les règles floues sont par exemple les suivantes pour le contrôle de la borne de recharge :
- Si l'irradiance est très élevée et le tarif solaire est très faible, alors l'heure de démarrage de la borne de recharge est le matin tôt (priorité maximale à l'énergie solaire) ;
- Si l'irradiance est élevée et le tarif solaire est très faible ou faible, alors l'heure de démarrage de la borne de recharge est le matin tôt ou matin (priorité à l'énergie solaire) ;
- Si l'irradiance est moyenne et le tarif solaire est très faible ou faible, alors l'heure de démarrage de la borne de recharge est le matin ou midi (équilibre entre l'énergie solaire et la recharge du véhicule) ;
- Si l'irradiance est faible et le tarif solaire est très faible, alors l'heure de démarrage de la borne de recharge est midi ou après-midi (priorité à l'énergie solaire tout en limitant la décharge du réseau) ;
- Si l'irradiance est très faible ou le tarif solaire est élevé, la borne de recharge ne doit pas être activée (priorité à l'économie d'énergie).

On note que ces règles supposent que le véhicule électrique soit branché sur la borne de recharge. Le système peut également intégrer des informations sur le niveau de charge du véhicule pour affiner les décisions d'activation.

Dans un autre mode de réalisation, pour définir les premiers profils individuels optimisés de consommation pour les appareils 2, l'unité de traitement 16 (ou un serveur 23 du *cloud* 24, piloté par l'unité de traitement 16) exécute au moins une inférence d'au moins un modèle **d'apprentissage** automatique.

A nouveau, l'optimisation prend en compte plusieurs variables telles que l'irradiance prédite pour le lendemain, la température extérieure prédite pour le lendemain, les consignes du client par exemple pour la température et l'eau chaude, ainsi que les tarifs opérateur et solaire. L'objectif principal de cette optimisation est de déterminer le moment optimal de démarrage des appareils, et par exemple la borne de recharge, le ballon d'eau chaude et la pompe à chaleur, en fonction des conditions météorologiques prévues et des préférences du client.

Le modèle est par exemple un réseau de neurones artificiels (ANN, pour *Artificial Neural Network*) ou un algorithme de renforcement (RL, pour *Reinforcement Learning*). Ici, on utilise un réseau de neurones artificiels.

L'unité de traitement 16 réalise tout d'abord une collecte de données, pendant un certain temps.

Les données collectées comprennent des données « historiques », et par exemple des données de l'irradiance solaire, de la température extérieure, des tarifs de l'énergie, de la consommation d'énergie domestique, etc.

Les données collectées comprennent aussi des données obtenues en temps réel, via des mesures réalisées par les capteurs.

L'unité de traitement 16 met œuvre un prétraitement des données collectées. L'unité de traitement 16 nettoie et normalise les données collectées pour les rendre compatibles avec le modèle utilisé.

Les données collectées sont divisées en un ensemble de données d'entraînement et un ensemble de données de test.

Le modèle est conçu de la manière suivante.

On conçoit un modèle avec des couches d'entrée correspondant aux paramètres d'entrée utilisés (par exemple : irradiance, température, consignes client, tarifs énergétiques).

On utilise des couches cachées pour capturer les relations non linéaires complexes entre les variables.

On ajoute une couche de sortie pour prédire les temps optimaux de démarrage des appareils.

Le modèle est alors entraîné dans l'unité de traitement 16 ou, de préférence, sur un serveur (par exemple du *cloud* 24), en utilisant des techniques de rétropropagation et d'optimisation pour minimiser l'erreur de prédiction.

Le modèle est alors validé sur l'ensemble de données de test pour évaluer ses performances.

Chaque jour en cours, l'unité de traitement 16 exécute une inférence du modèle préalablement entraîné pour faire des prédictions en temps réel et définir les profils optimisés en fonction des données météorologiques et des préférences du client.

Les temps de démarrage des appareils sont ajustés en conséquence.

L'utilisation d'un modèle d'apprentissage automatique présente les avantages suivants.
- précision accrue : les modèles d'apprentissage automatique, notamment à base de réseaux de neurones, peuvent capturer des relations complexes entre les variables, ce qui peut conduire à des prédictions plus précises.
- adaptabilité : les modèles d'apprentissage automatique, notamment à base de réseaux de neurones, peuvent s'adapter à de nouvelles données et à des changements dans les conditions environnementales ou les préférences des clients.
- optimisation continue : les modèles d'apprentissage automatique, notamment à base de réseaux de neurones, peuvent être continuellement mis à jour et améliorés à mesure que de nouvelles données sont collectées.

Lors de l'exécution d'une inférence du modèle, réalisée par l'unité de traitement 16 (ou par un serveur), les entrées appliquées en entrée du modèle sont par exemple :
- une irradiance prévue pour la période déterminée (ici pour le jour suivant) ;
- une température prévue pour la période déterminée (ici pour le jour suivant) ;
- au moins une consigne utilisateur (température et eau chaude) ;
- au moins un tarif énergétique (par exemple opérateur et solaire).

La sortie du modèle est par exemple le temps optimal de démarrage des équipements (borne de recharge, chauffe-eau, pompe à chaleur).

En utilisant cette approche, l'algorithme vise à optimiser l'utilisation de l'énergie disponible, à réduire la dépendance aux sources d'énergie traditionnelles et à réaliser des économies d'énergie significatives pour les utilisateurs. De plus, en tenant compte des prévisions météorologiques et des préférences du client, l'algorithme peut planifier intelligemment le fonctionnement des équipements électriques, contribuant ainsi à une utilisation plus efficace des ressources énergétiques.

Bien entendu, l'invention n'est pas limitée aux modes de réalisation décrits mais englobe toute variante entrant dans le champ de l'invention tel que défini par les revendications.

On a décrit ici que l'équipement de gestion 14 pilote les appareils électriques 2 via un module centralisé 29 et des modules déportés 28. Ces modules sont optionnels. L'équipement de gestion pourrait piloter un ou des appareils sans utiliser de module centralisé, et même directement, sans utiliser de module centralisé ni de module déporté.

On a distingué ici des premiers moyens de communication et des deuxièmes moyens de communication de l'équipement de gestion. Ces premiers et deuxièmes moyens de communication peuvent être regroupés entièrement ou partiellement en un même module.

La période déterminée n'est pas nécessairement le jour suivant, il peut aussi s'agir d'une période « future » différente, par exemple la semaine suivante, les deux jours suivants, etc.

Toutes les étapes du procédé d'optimisation ne sont pas nécessairement réalisées dans l'unité de traitement ; certains pourraient être réalisées dans un autre équipement, et par exemple dans un ou des serveurs du *cloud.* Par exemple, l'algorithme de logique floue peut être exécuté sur le *cloud.* De même, comme on l'a vu si un modèle d'apprentissage automatique est utilisé, il peut être entraîné sur le *cloud.* L'exécution des inférences du modèle entraîné peut aussi être réalisée sur le *cloud.*

La source d'énergie renouvelable ne comprend pas nécessairement de panneau photovoltaïque. Il pourrait s'agir d'une autre source d'énergie, par exemple d'une éolienne.

L'équipement de gestion peut être installé à un endroit quelconque de l'installation. Il peut être intégré dans un équipement réalisant d'autres fonctions (compteur par exemple). Un même équipement de gestion pourrait être connecté à plusieurs installations.

Les profils individuels attendus de consommation et les profils individuels optimisés peuvent être définis pour des groupes d'appareils (plusieurs radiateurs par exemple).

## Revendications

1. Procédé d'optimisation d'une consommation électrique globale d'une installation (1) comportant des appareils (2) et reliée à une source d'énergie renouvelable (3), le procédé d'optimisation comprenant les premières étapes, réalisées avant une période déterminée, de :
- acquérir des mesures de la consommation électrique globale de l'installation (1) ;
- mettre en œuvre un procédé de désagrégation de manière à prédire à partir desdites mesures, pour chaque appareil, un profil individuel attendu de consommation (C1) dudit appareil en fonction du temps pendant la période déterminée ;
- prédire un profil attendu de production renouvelable (C2) par la source d'énergie renouvelable en fonction du temps pendant la période déterminée ;
- adapter le profil individuel attendu de consommation d'au moins un appareil en fonction du profil attendu de production renouvelable, pour définir des premiers profils individuels optimisés de consommation (C3) pour les appareils, permettant de maximiser une utilisation d'une énergie électrique renouvelable, produite par la source d'énergie renouvelable, pour alimenter les appareils (2) au cours de la période déterminée ;
le procédé d'optimisation comprenant de plus la deuxième étape, mise en œuvre au cours de la période déterminée, de piloter les appareils en utilisant les premiers profils individuels optimisés de consommation.

2. Procédé d'optimisation selon la revendication 1, dans lequel le profil individuel attendu de consommation d'au moins un appareil est aussi adapté, pour obtenir le premier profil individuel optimisé de consommation dudit appareil, en fonction d'une consigne utilisateur et/ou d'un tarif énergétique.

3. Procédé d'optimisation selon l'une des revendications précédentes, dans lequel la prédiction du profil attendu de production renouvelable (C2) utilise des prévisions météorologiques pour la période déterminée.

4. Procédé d'optimisation selon l'une des revendications précédentes, dans lequel, pour au moins un appareil (2), la prédiction du profil individuel attendu de consommation (C1) dudit appareil utilise des prévisions météorologiques pour la période déterminée.

5. Procédé d'optimisation selon l'une des revendications précédentes, comprenant les étapes, suite à la mise en œuvre du procédé de désagrégation, de :
- classer chaque appareil (2) dans au moins une catégorie parmi un groupe de catégories comprenant au moins trois catégories parmi : appareil interruptible, appareil non interruptible, appareil formant une charge principalement résistive, appareil formant une charge principalement inductive, appareil ayant une consommation déplaçable par bloc ;
- définir les premiers profils individuels optimisés de consommation en fonction de ce classement.

6. Procédé d'optimisation selon la revendication 5, dans lequel, pour un appareil interruptible, l'adaptation du profil individuel attendu de consommation comprend les étapes de :
- désactiver l'appareil interruptible pendant au moins une première période de faible disponibilité de l'énergie électrique renouvelable ;
- réactiver l'appareil interruptible pendant au moins une première période de forte disponibilité de l'énergie électrique renouvelable ;
- la première période de faible disponibilité et la première période de forte disponibilité appartenant à la période déterminée.

7. Procédé d'optimisation selon l'une des revendications 5 ou 6, dans lequel, pour un appareil formant une charge principalement résistive, l'adaptation du profil individuel attendu de consommation comprend les étapes de :
- réduire une puissance consommée par ledit appareil au cours d'au moins une deuxième période de faible disponibilité de l'énergie électrique renouvelable ;
- étaler la puissance consommée sur une durée allongée ou bien augmenter la puissance consommée par ledit appareil résistif au cours d'au moins une deuxième période de forte disponibilité de l'énergie électrique renouvelable ;
la deuxième période de faible disponibilité et la deuxième période de forte disponibilité appartenant à la période déterminée.

8. Procédé d'optimisation selon l'une des revendications 5 à 7, dans lequel, pour un appareil ayant une consommation déplaçable par bloc, l'adaptation du profil individuel attendu de consommation comprend l'étape de déplacer temporellement une consommation dudit appareil sans changer une forme dudit profil depuis une troisième période (D1, D2, D3) de faible disponibilité de l'énergie électrique renouvelable vers une troisième période (D'1, D'2, D'3) de forte disponibilité de l'énergie électrique renouvelable ; la troisième période de faible disponibilité et la troisième période de forte disponibilité appartenant à la période déterminée.

9. Procédé d'optimisation selon l'une des revendications précédentes, comprenant en outre les deuxièmes étapes, au cours de la période déterminée, de :
- surveiller en temps réel une production courante de la source d'énergie renouvelable (3) et/ou une évolution de conditions météorologiques et/ou une consommation électrique courante d'au moins un appareil (2) ;
- adapter les premiers profils individuels optimisés de consommation en fonction de résultats de cette surveillance, pour produire des deuxièmes profils individuels optimisés de consommation pour les appareils ;
- piloter les appareils en utilisant les deuxièmes profils individuels optimisés de consommation.

10. Procédé d'optimisation selon l'une des revendications précédentes, comprenant l'étape de mettre en œuvre un algorithme de logique floue (35) pour définir le premier profil individuel optimisé de consommation d'au moins un appareil (2).

11. Procédé d'optimisation selon la revendication 10, dans lequel l'algorithme de logique floue (35) a pour entrées (36) plusieurs grandeurs parmi :
- une irradiance prévue pour la période déterminée ;
- une température prévue pour la période déterminée ;
- au moins une consigne utilisateur ;
- au moins un tarif énergétique.

12. Procédé d'optimisation selon l'une des revendications 10 ou 11, dans lequel l'algorithme de logique floue (35) a pour sortie (37) un temps optimal de démarrage pour ledit appareil.

13. Procédé d'optimisation selon l'une des revendications 1 à 9, comprenant l'étape d'exécuter une inférence d'un modèle d'apprentissage automatique préalablement entraîné pour définir le premier profil individuel optimisé de consommation d'au moins un appareil (2).

14. Procédé d'optimisation selon la revendication 13, dans lequel le modèle d'apprentissage automatique a pour entrées plusieurs grandeurs parmi :
- une irradiance prévue pour la période déterminée ;
- une température prévue pour la période déterminée ;
- au moins une consigne utilisateur ;
- au moins un tarif énergétique.

15. Procédé d'optimisation selon l'une des revendications 13 ou 14, dans lequel le modèle d'apprentissage automatique a pour sortie un temps optimal de démarrage pour ledit appareil.

16. Equipement de gestion (14), agencé pour piloter les appareils (2) de l'installation (1), et comprenant une unité de traitement (16) dans laquelle sont mises en œuvre au moins certaines des étapes du procédé d'optimisation selon l'une des revendications précédentes.

17. Programme d'ordinateur comprenant des instructions qui conduisent l'unité de traitement (16) de l'équipement de gestion (14) de la revendication 16 à exécuter les étapes du procédé d'optimisation selon l'une des revendications 1 à 15.

18. Support d'enregistrement lisible par ordinateur, sur lequel est enregistré le programme d'ordinateur selon la revendication 17.
